# FASCICULE DE BREVET EUROPEEN

(11) **EP 2 469 955 B1**
(45) Date de publication et mention de la délivrance du brevet: **17.04.2019**
(21) Numéro de dépôt: 11190746.5
(22) Date de dépôt: 25.11.2011
(51) Int. Cl.: H04L 12/865, H04W 24/00, H04W 74/00

(54) **Dispositif de communication, et procédé, programme d'ordinateur et moyens de stockage correspondants**
Kommunikationsvorrichtung und entsprechendes Verfahren, Softwareprodukt für Computer und entsprechende Speichermittel
Communication device and corresponding method, computer program and storage means

(30) Priorité: 30.11.2010 FR 1059889; 30.11.2010 FR 1059887
(43) Date de publication de la demande: 27.06.2012
(73) Titulaire: Sagemcom Energy & Telecom SAS, 92500 Rueil-Malmaison (FR)
(72) Inventeur: Perret, Jean, 92500 RUEIL MALMAISON (FR)
(74) Mandataire: Cabinet Le Guen Maillet

(56) Documents cités:
- US-A1- 2009 081 962
- US-A1- 2009 129 367
- US-A1- 2009 196 210
- US-A1- 2009 225 717
- US-A1- 2010 144 340
- "IEEE Recommended Practice for Information Technology - Telecommunications and Information Exchange Between Systems - Local and Metropolitan Area Networks - Specific Requirements Part 15.2: Coexistence of Wireless Personal Area Networks With Other Wireless Devices Operating in Unlicensed Frequency Ba", IEEE STANDARD; [IEEE STANDARD], IEEE, PISCATAWAY, NJ, USA, 1 janvier 2003 (2003-01-01), pages _1-115, XP017603614, ISBN: 978-0-7381-3703-2
- JENNIC LTD: "Co-existence of IEEE 802.15.4 at 2.4 GHz. Application Note", JENNIC APPLICATION NOTE, , vol. JN-AN-1079, no. REVISION 1.0 18 février 2008 (2008-02-18), pages 1-34, XP002541626, Extrait de l'Internet: URL:http://www.jennic.com [extrait le 2011-08-09]

## Description

La présente invention concerne un dispositif de communication comprenant un module principal de communication et des moyens d'arbitrage de transmissions sur un canal de communication, les moyens d'arbitrage étant destinés à arbitrer des requêtes de transmission sur ledit canal associées à des informations de priorité respectives et transmises par le module principal et un unique module secondaire. La présente invention concerne également un procédé de gestion de transmission sur un canal de communication mis en oeuvre dans ce dispositif de communication. La présente invention concerne également un programme d'ordinateur permettant la mise en oeuvre du procédé et des moyens de stockage stockant un tel programme d'ordinateur.

Dans le cas où deux technologies de communication partagent la même bande fréquentielle, des interférences vont se produire lors de tentatives de transmissions concurrentielles sur le canal de communication. C'est le cas par exemple quand sont simultanément utilisées la technologie WiFi (marque déposée), basée sur les spécifications IEEE 802.11 pour l'implémentation de réseaux numériques locaux à liaison sans fil, et la technologie ZigBee (marque déposée), basée sur les spécifications IEEE 802.15.4 de contrôle d'accès à un support sans-fil (*Wireless Medium Access Control* en anglais) et de couche physique (*Physical layer* en anglais) pour des réseaux sans-fil bas débit à dimension personnelle (LR-WPAN ou *Low Rate Wireless Personal Area Networks* en anglais).

Même dans le cas où les bandes de fréquences sont différentes, des interférences peuvent également se produire du fait de leur localisation au sein du même dispositif de communication. C'est par exemple le cas quand sont simultanément utilisées la technologie ZigBee (marque déposée) et la technologie de service radio général par paquets GPRS (*General Packet Radio Service* en anglais).

Le document « IEEE 802.15.2 : Coexistence of Wireless Personal Area Networks with Other Wireless Devices Operating in Unlicensed Frequency Bands » publié le 28 août 2003, traite de la gestion des interférences entre technologies de communication selon les spécifications IEEE 802.11 et selon les spécifications IEEE 802.15.1 de contrôle d'accès à un support sans-fil et de couche physique pour des réseaux sans-fil à dimension personnelle (WPAN ou *Wireless Personal Area Networks* en anglais), telle que la technologie Bluetooth (marque déposée).

Le document IEEE 802.15.2 propose alors un mécanisme d'arbitration de trafic de paquets PTA (*Packet Traffic Arbitration* en anglais) entre les technologies selon les spécifications IEEE 802.11 et selon les spécifications IEEE 802.15.1. Sur cette base, les fabricants de composants conformes à ces spécifications ont développé un mécanisme d'arbitration de transmissions sur le canal de communication appelé « *3-wire* » (ou *3 fils* en français). Ce mécanisme définit un module principal de communication, conforme aux spécifications IEEE 802.11, et un module secondaire de communication, conforme aux spécifications IEEE 802.15.1. Le module secondaire signale au module principal sa volonté de transmettre sur le canal de communication. Pour ce faire, le module secondaire transmet sur un premier fil une requête de transmission sur le canal de communication, et une information de priorité associée à cette requête sur un second fil. Le module principal effectue alors un arbitrage entre cette requête et ses propres besoins de transmission sur le canal de communication, en fonction de l'information de priorité fournie par le module secondaire. Le module principal transmet ensuite sa décision au premier module via un troisième fil. C'est de ce principe qu'est tirée l'appellation *3-wire.* Des informations complémentaires peuvent être échangées entre le module secondaire et le module principal. On parle alors de mécanisme *n-wire, n* représentant le nombre de fils nécessaires à la mise en oeuvre du mécanisme.

Cependant, ces mécanismes d'arbitrage de transmissions sur le canal de communication ne gèrent que les conflits d'accès au canal de communication par des modules de communication au sein d'un même dispositif. Les tentatives de transmission sur le canal de communication par des dispositifs distants ne sont pas prises en compte, et des interférences peuvent alors survenir.

De plus, ces mécanismes d'arbitrage de transmissions sur le canal de communication ne permettent pas de gérer des conflits d'accès à des ressources internes au dispositif de communication. En effet, les transmissions sur le canal de communication entraînent des appels de données qui sont consommateurs de ressources au sein du dispositif de communication, comme par exemple quant à l'utilisation d'un bus de données utilisé pour fournir les données à transmettre sur le canal de communication et qui est aussi partagé par plusieurs applications.

De plus, ces mécanismes d'arbitrage de transmissions sur le canal de communication ne fonctionnent que pour gérer deux modules de communication concurrents. Or, de nombreux composants comportant cette limitation sont aujourd'hui disponibles sur étagère.

Il est connu 1e document US 2009/081962 A1 qui divulgue un dispositif de communication permettant de mettre en oeuvre des communications Bluetooth, WiFi et WiMax. Le dispositif de communication divulgué comporte de la logique de gestion de coexistence qui permet de cadencer les transmissions selon ces trois standards de communication afin de limiter les interférences.

Il est aussi connu le document US 2009/225717 A1 qui divulgue un système de communication dans lequel un dispositif dispose de plusieurs radios, et d'un module de contrôle d'arbitrage qui permet de cadencer les communications de chacune de ces radios en fonction du statut des autres radios et éventuellement de niveaux de priorité.

Il est aussi connu le document « IEEE 802.15.2 : Coexistence of Wireless Personal Area Networks with Other Wireless Devices Operating in Unlicensed Frequency Bands », 2003, qui divulgue un module secondaire de communication signalant à un module principal de communication sa volonté de transmettre sur un canal de communication partagé.

Il est enfin connu le document US 2009/129367 A1, qui divulgue une méthode de gestion de transmissions dans le cadre d'une première connexion et d'une seconde connexion reposant sur des protocoles distincts, selon laquelle la seconde connexion est inhibée pendant certaines tranches de temps, afin d'invoquer un mécanisme de retransmission et de limiter les interférences avec la première connexion.

Il est souhaitable de pallier ces différents inconvénients de l'état de la technique.

Il est notamment souhaitable de fournir une solution qui permette de suspendre les transmissions sur un canal de communication effectuées par un module de communication, tout en assurant la compatibilité de fonctionnement avec les composants disponibles sur étagère, tel que par exemple les composants implémentant le mécanisme *3-wire.*

Il est notamment souhaitable de fournir une solution qui permette de gérer des conflits de transmission sur un canal de communication par des dispositifs de communication séparés, tout en assurant la compatibilité de fonctionnement avec les composants disponibles sur étagère, tel que par exemple les composants implémentant le mécanisme *3-wire.*

Il est notamment souhaitable de fournir une telle solution qui permette aussi de gérer des conflits de transmission sur le canal de communication entre dispositifs de communication distants les uns des autres par rapport au canal de communication.

Il est notamment souhaitable de fournir une telle solution qui permette aussi de gérer des conflits d'accès à des ressources internes à un dispositif de communication et partagées entre un processus de transmission sur le canal de communication et au moins un autre processus du dispositif de communication.

L'invention concerne un dispositif de communication comprenant au moins un module de communication et des moyens d'arbitrage de transmissions sur un canal de communication, lesdits moyens d'arbitrage étant destinés à arbitrer des requêtes d'accès audit canal transmises par des modules de communication, le dispositif de communication étant tel qu'il comporte des moyens d'émulation du comportement d'un module de communication vis-à-vis desdits moyens d'arbitrage, de façon à interdire toute transmission par ledit ou lesdits module(s) de communication sur ledit canal. De plus, lesdits moyens d'émulation sont mis en oeuvre sur la base d'informations relatives à des transmissions prévues par des services utilisant le canal de communication et effectuées sur ledit canal de communication par au moins un dispositif extérieur audit dispositif de communication. Ainsi, il est possible de suspendre les transmissions sur un canal de communication effectuées par un module de communication, tout en assurant la compatibilité de fonctionnement avec les composants disponibles sur étagère.

De plus, il est possible de gérer des conflits de transmission sur le canal de communication par des dispositifs de communication séparés, tout en assurant la compatibilité de fonctionnement avec les composants disponibles sur étagère.

Selon un mode de réalisation particulier, le dispositif de communication comporte des moyens de recensement des services utilisant le canal de communication. Ainsi, le dispositif de communication peut prévoir et anticiper des phases pendant lesquelles il va devoir émuler le comportement d'un module de communication. Le dispositif de communication est ainsi plus réactif pour éviter d'éventuelles interférences sur le canal de communication.

Selon un mode de réalisation particulier, le dispositif de communication comporte des moyens de détermination d'informations qui sont relatives à la périodicité et la durée de communications des services recensés et qui définissent lesdites informations relatives aux transmissions prévues par les services utilisant le canal de communication et effectuées sur ledit canal de communication par ledit au moins un dispositif extérieur audit dispositif de communication. Ainsi, avec ces informations, le dispositif de communication peut prévoir et anticiper des phases pendant lesquelles il va devoir émuler le comportement d'un module de communication, tout en limitant les échanges entre le dispositif de communication et chaque dispositif extérieur.

Selon un mode de réalisation particulier, lesdits moyens de détermination des informations qui sont relatives à la périodicité et la durée de communications des services recensés comprennent des moyens d'obtention desdites informations qui sont relatives à la périodicité et la durée de communications des services recensés auprès du ou des dispositif(s) extérieur(s) et/ou des moyens d'obtention desdites informations qui sont relatives à la périodicité et la durée de communications des services recensés par apprentissage en analysant des signaux ou données échangés sur le canal de communication.

Selon un mode de réalisation particulier, lesdits moyens d'émulation sont mis en oeuvre sur la base d'informations de partage d'au moins une ressource dudit dispositif de communication partagée entre ledit ou lesdits module(s) de communication et au moins un autre module. Ainsi, il est possible de gérer des conflits d'accès à des ressources internes à un dispositif de communication et partagées entre un processus de transmission sur le canal de communication et au moins un autre processus du dispositif de communication.

L'invention concerne également un procédé de gestion d'accès à un canal de communication, mis en oeuvre dans un dispositif de communication comprenant au moins un module de communication et des moyens d'arbitrage de transmissions sur un canal de communication, lesdits moyens d'arbitrage étant destinés à arbitrer des requêtes de transmissions sur le canal transmises par des modules de communication, le procédé étant tel qu'il comporte une étape d'émulation du comportement d'un module de communication vis-à-vis desdits moyens d'arbitrage, de façon à interdire toute transmission par ledit ou lesdits module(s) de communication sur ledit canal. De plus, l'étape d'émulation est mise en oeuvre sur la base d'informations relatives à des transmissions prévues par des services utilisant le canal de communication et effectuées sur ledit canal de communication par au moins un dispositif extérieur audit dispositif de communication.

L'invention concerne également un programme d'ordinateur, qui peut être stocké sur un support et/ou téléchargé d'un réseau de communication, afin d'être lu par un système informatique ou un processeur. Ce programme d'ordinateur comprend des instructions pour implémenter le procédé mentionné ci-dessus, lorsque ledit programme est exécuté par un système informatique ou un processeur. L'invention concerne également des moyens de stockage comprenant un tel programme d'ordinateur.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
- la Fig. 1 illustre schématiquement un dispositif de communication, selon un premier mode de réalisation ;
- la Fig. 2 illustre schématiquement un dispositif de communication, selon un second mode de réalisation ;
- la Fig. 3 illustre schématiquement une première réalisation de dispositif de gestion de priorité du dispositif de communication ;
- la Fig. 4 illustre schématiquement une seconde réalisation de dispositif de gestion de priorité du dispositif de communication ;
- la Fig. 5 illustre schématiquement un algorithme mis en oeuvre par le dispositif de gestion de priorité du dispositif de communication ;
- la Fig. 6 illustre schématiquement un dispositif de communication, selon un troisième mode de réalisation ;
- la Fig. 7 illustre schématiquement un dispositif de communication, selon un quatrième mode de réalisation ;
- la Fig. 8 illustre schématiquement un algorithme mis en oeuvre par un processeur de dispositif de communication, selon le quatrième mode de réalisation.

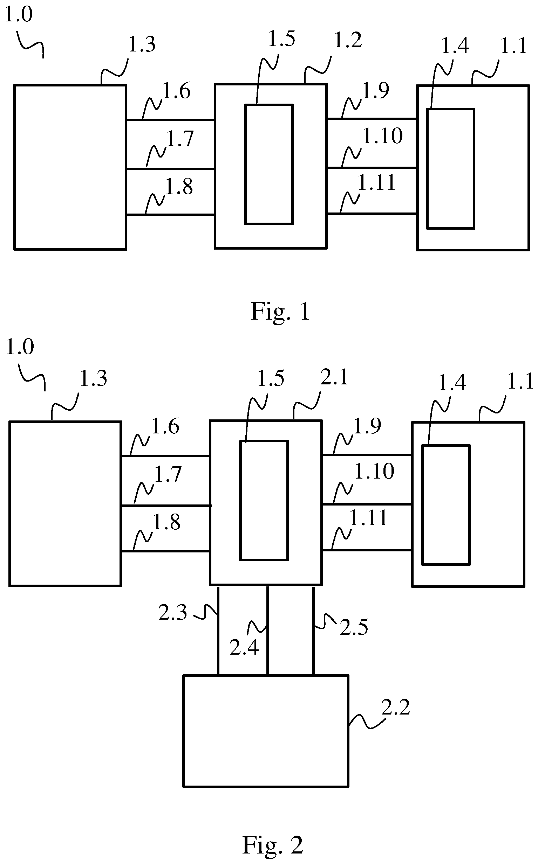

La Fig. 1 illustre schématiquement un dispositif de communication, selon un premier mode de réalisation.

Un dispositif de communication 1.0 comporte un module principal 1.1 de communication comportant par exemple une interface de communication selon la technologie WiFi (marque déposée).

Le module principal 1.1 comporte des moyens d'arbitrage 1.4 adaptés pour recevoir des requêtes de transmissions sur le canal de communication de la part d'un unique module secondaire de communication, outre celles du module principal 1.1. Ces requêtes sont reçues via un lien ou fil 1.9. En association avec ces requêtes sont transmises, via un lien ou fil 1.10, des informations de priorité respectives. Un arbitrage est alors effectué entre cette requête et les besoins de transmission sur le canal de communication propres au module principal 1.1, en fonction de l'information de priorité associée à la requête. Si le module principal 1.1 doit effectuer une transmission sur le canal de communication de plus haute priorité que celle de la requête reçue, une décision de refus de transmission sur le canal de communication est transmise via un lien ou fil 1.11. Sinon, une décision d'acceptation de transmission sur le canal de communication est transmise via le lien ou fil 1.11.

Dans les systèmes de type *3-wire,* les signaux transmis sur le lien ou fil 1.9 sont communément dénommés BT_ACTIVE, ceux transmis sur le lien ou fil 1.10 sont communément dénommés BT_PRIORITY et ceux transmis sur le lien ou fil 1.11 sont communément dénommés WLAN_ACTIVE. Ceci est lié au fait que les systèmes *3-wire* sont typiquement destinés à être utilisés pour gérer la coexistence de technologies Bluetooth (marque déposée) et WLAN.

Le module 1.1 est donc dit *principal* dans le sens où il est directement connecté, voire comporte, ces moyens d'arbitrage 1.4 de transmissions sur le canal de communication. Lorsqu'il comporte ces moyens d'arbitrage 1.4, il décide d'accorder ou pas, à un autre module de communication, de transmettre sur le canal de communication. Cet autre module est alors dit *secondaire* en ce qu'il n'est pas maître, mais est esclave, de la décision.

De manière préférentielle, les moyens d'arbitrage 1.4 sont inclus dans un même circuit intégré que le module principal de communication, mais peuvent aussi être implémentés dans un circuit intégré séparé.

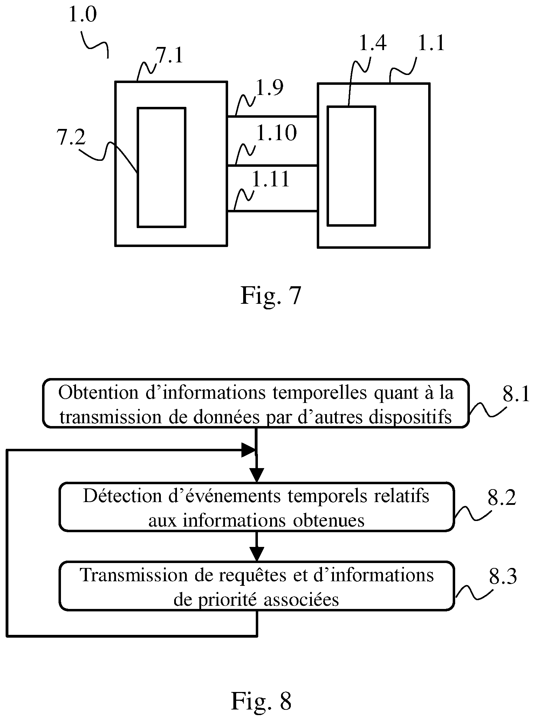

Le dispositif de communication 1.0 comporte en outre un premier module secondaire 1.2 et un deuxième module secondaire 1.3 de communication. Le premier module secondaire 1.2 comprend par exemple une interface de communication selon la technologie Zigbee (marque déposée). Le deuxième module secondaire 1.3 comprend par exemple une interface de communication selon la technologie Bluetooth (marque déposée). Dans une variante de réalisation, le deuxième module secondaire 1.3 est réalisé par un processeur comprenant des moyens d'émulation du comportement d'un tel module secondaire de communication, de façon à interdire toute transmission, sur le canal de communication, par tout module de communication du dispositif de communication 1.0. Un tel processeur émulant le comportement d'un module secondaire de communication est plus amplement décrit ci-après en relation avec les Figs. 7 et 8.

Le dispositif de communication 1.0 peut comporter un nombre plus important de modules secondaires de communication.

Le dispositif de communication 1.0 comporte en outre un dispositif 1.5 de gestion de priorité d'accès au canal de communication. Sur la Fig. 1, le dispositif 1.5 de gestion de priorité est inclus dans un même circuit intégré que le module secondaire de communication comprenant l'interface de communication selon la technologie Zigbee (marque déposée).

Le dispositif 1.5 de gestion de priorité reçoit, via un lien ou fil 1.6, des requêtes de transmission sur le canal de communication transmises par le deuxième module secondaire 1.3. Le dispositif 1.5 de gestion de priorité reçoit, via un lien ou fil 1.7, des informations de priorité respectivement associées à ces requêtes. Le dispositif 1.5 de gestion de priorité reçoit aussi, de manière interne au circuit intégré, des requêtes de la part du module secondaire de communication Zigbee (marque déposée) et des informations de priorité respectivement associées.

Si de telles requêtes lui parviennent de manière concurrente, le dispositif 1.5 de gestion de priorité sélectionne une de ces requêtes concurrentes, en fonction des informations de priorité. La requête de plus haute priorité est alors transmise aux moyens d'arbitrage 1.4 par le bais du lien ou fil 1.9 et l'information de priorité associée lui est transmise par le bais du lien ou fil 1.10. Si les requêtes ne lui parviennent pas de manière concurrente, le dispositif 1.5 de gestion de priorité transmet chacune de ces requêtes et son information de priorité associée aux moyens d'arbitrage 1.4.

Le dispositif 1.5 de gestion de priorité reçoit, via le lien ou fil 1.11, une décision quant à la requête transmise via le lien ou fil 1.9 et la transmet au module secondaire concerné. Si le module secondaire concerné est le module secondaire 1.3, le dispositif 1.5 de gestion de priorité transmet cette décision via un lien ou fil 1.8. Sinon, le dispositif 1.5 de gestion de priorité transmet la décision, de manière interne au circuit intégré, au module secondaire de communication Zigbee (marque déposée).

Il est donc à noter que le dispositif 1.5 de gestion de priorité ne prend pas de décision d'autorisation de transmission sur le canal de communication par les modules secondaires de communication. Cette fonction est en effet réalisée par les moyens d'arbitrage 1.4.

La Fig. 2 illustre schématiquement le dispositif de communication 1.0, selon un second mode de réalisation.

Le mode de réalisation de la Fig. 2 diffère de celui de la Fig. 1 en ce que le dispositif 1.5 de gestion de priorité n'est pas inclus dans un même circuit intégré qu'un module secondaire de communication. Le dispositif de communication 1.0 comprend un module secondaire 2.2 de communication interfacé avec le dispositif 1.5 de gestion de priorité via des liens ou fils 2.3, 2.4 et 2.5. Le lien ou fil 2.3 permet la transmission de requêtes de transmission sur le canal de communication, le lien ou fil 2.4 celle d'informations de priorité et le lien ou fil 2.5 celle des décisions prises par les moyens d'arbitrage 1.4.

Selon le mode de réalisation de la Fig. 2, le module secondaire 1.3 comprend une interface de communication Bluetooth (marque déposée) ; le module secondaire 2.2 comprend une interface de communication Zigbee (marque déposée) ou correspond à un processeur comprenant des moyens d'émulation du comportement d'un module secondaire de communication.

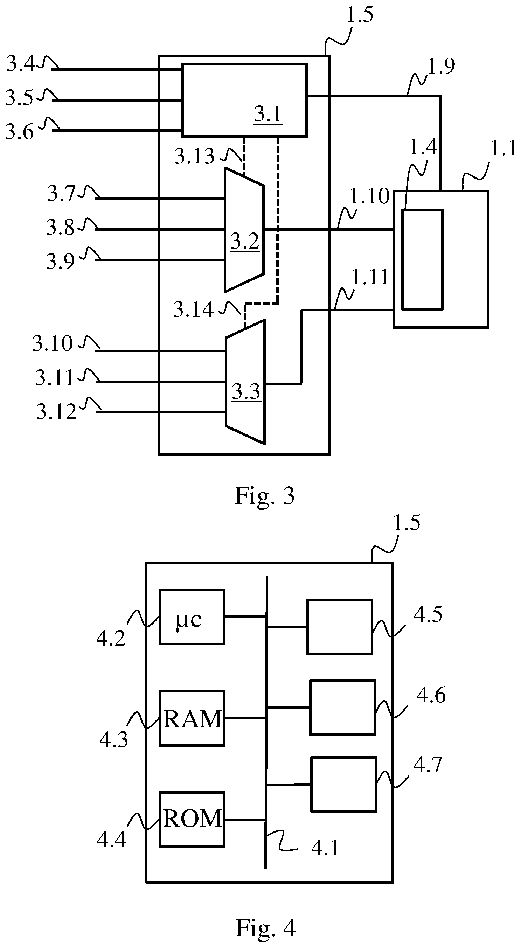

La Fig. 3 illustre schématiquement une première réalisation du dispositif 1.5 de gestion de priorité, dont les fonctions sont ainsi implémentées sous forme matérielle par une machine ou un composant dédié, tel qu'un FPGA (*Field-Programmable Gate Array* en anglais ou *Matrice de Portes Programmable sur Champ* en français) ou un ASIC (*Application-Specific Integrated Circuit* en anglais ou *Circuit Intégré Spécifique à une Application* en français).

Le dispositif 1.5 de gestion de priorité comporte un module 3.1 de gestion de priorité et de sélection de requêtes de transmission sur le canal de communication. Ce module 3.1 reçoit des informations de priorité de la part de trois modules secondaires de communication, via des liens 3.4, 3.5 et 3.6. Les requêtes auxquelles sont associées ces informations de priorité sont respectivement reçues par le dispositif 1.5 de gestion de priorité via des liens ou fils 3.7, 3.8 et 3.9. Les décisions quant à ces requêtes sont respectivement transmises via des liens ou fils 3.10, 3.11 et 3.12.

Le dispositif 1.5 de gestion de priorité comporte un multiplexeur 3.2 dont les entrées sont les liens ou fils 3.7, 3.8 et 3.9, et la sortie est le lien ou fil 1.10. Il comporte en outre un démultiplexeur 3.3 dont l'entrée est le lien 1.11 et les sorties sont les liens ou fils 3.10, 3.11 et 3.12.

Le module 3.1 effectue une sélection d'une requête parmi les requêtes concurrentes reçues par le multiplexeur 3.2, en fonction des informations de priorité reçues par le biais des liens 3.4, 3.5 et 3.6. Le module 3.1 commande ensuite le multiplexeur 3.2 par le biais d'un lien de contrôle 3.13 de manière à ce que la requête sélectionnée soit aiguillée sur le lien 1.10. Le module 3.1 transmet aussi, via le lien 1.9, l'information de priorité associée à la requête sélectionnée. De plus, le module 3.1 commande le démultiplexeur 3.3 par le biais d'un lien de contrôle 3.14 de manière à ce que la décision prise par les moyens d'arbitrage 1.4 soit aiguillée vers le lien 3.10, 3.11 ou 3.12 concerné.

La Fig. 4 illustre schématiquement une seconde réalisation du dispositif 1.5 de gestion de priorité, dont les fonctions sont ainsi implémentées sous forme logicielle par exécution d'un ensemble d'instructions par une machine programmable, tel qu'un DSP (*Digital Signal Processor* en anglais ou *Unité de Traitement de Signal Numérique* en français), un microcontrôleur ou un processeur.

Le dispositif 1.5 de gestion de priorité comporte, reliés par un bus de communication 4.1 :
- un processeur, micro-processeur, microcontrôleur (noté µc) ou CPU (*Central Processing Unit* en anglais ou *Unité Centrale de Traitement* en français) 4.2 ;
- une mémoire vive RAM (*Random Access Memory* en anglais ou *Mémoire à Accès Aléatoire* en français) 4.3 ;
- une mémoire morte ROM (*Read Only Memory* en anglais ou *Mémoire à Lecture Seule* en français) 4.4 ;
- un lecteur 4.5 de support de stockage, tel qu'un lecteur de carte SD (*Secure Digital Card* en anglais ou *Carte Numérique Sécurisée* en français) ;
- des moyens d'interface 4.6 avec le module principal 1.1 de communication ;
- des moyens d'interface 4.7 avec des modules secondaires de communication.

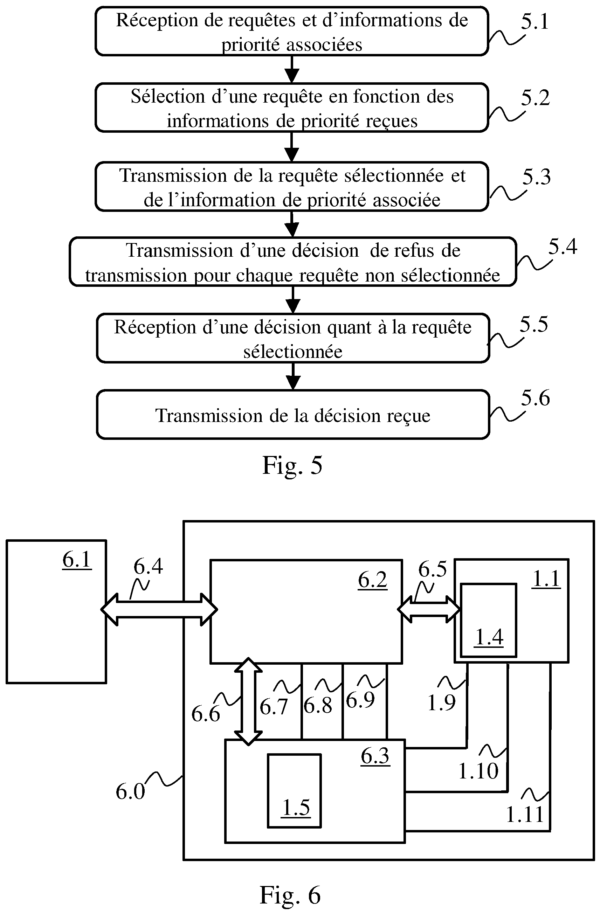

Le processeur 4.2 est capable d'exécuter des instructions chargées dans la RAM 4.3 à partir de la ROM 4.4, d'une mémoire externe (non représentée), d'un support de stockage, tel qu'une carte SD ou autre, ou d'un réseau de communication. Lorsque le dispositif de communication 1.0 est mis sous tension, le processeur 4.2 est capable de lire de la RAM 4.3 des instructions et de les exécuter. Ces instructions forment un programme d'ordinateur. Ce programme d'ordinateur cause la mise en oeuvre, par le processeur 4.2, de l'algorithme décrit ci-après en relation avec la Fig. 5.

La Fig. 5 illustre schématiquement un algorithme mis en oeuvre par le dispositif 1.5 de gestion de priorité.

Dans une étape 5.1, le dispositif 1.5 de gestion de priorité reçoit des requêtes de transmission sur le canal de communication en provenance de modules secondaires de communications, et reçoit des informations de priorité respectivement associées.

Dans une étape 5.2 suivante, le dispositif 1.5 de gestion de priorité sélectionne une requête parmi les requêtes reçues lors de l'étape 5.1. Si des requêtes sont reçues de manière concurrente, le dispositif 1.5 de gestion de priorité sélectionne la requête dont la priorité associée est la plus haute. Si ces requêtes reçues de manière concurrente ont le même niveau de priorité, le dispositif 1.5 de gestion de priorité peut effectuer une sélection arbitraire parmi ces requêtes. Si les requêtes sont reçues de manière non concurrente, le dispositif 1.5 de gestion de priorité sélectionne chacune de ces requêtes.

Dans une étape 5.3 suivante, le dispositif 1.5 de gestion de priorité transmet chaque requête sélectionnée, et son information de priorité associée, aux moyens d'arbitrage 1.4 du module principal 1.1. Le dispositif 1.5 de gestion de priorité fournit ainsi, aux moyens d'arbitrage 1.4, un candidat souhaitant transmettre sur le canal de communication ; charge aux moyens d'arbitrage 1.4 de décider quant à effectivement autoriser une transmission par le module secondaire ayant émis cette requête.

Dans une étape 5.4 suivante, le dispositif 1.5 de gestion de priorité peut transmettre, à chaque module secondaire ayant transmis une requête autre que la requête sélectionnée, une information de refus de transmission sur le canal de communication. Dans cette étape, le dispositif 1.5 de gestion de priorité ne prend pas de décision quant à effectivement autoriser une transmission sur le canal de communication. Il effectue uniquement une sélection de candidat en fonction des priorités des requêtes qu'il reçoit, la décision étant prise par les moyens d'arbitrage 1.4. Chaque module secondaire ayant transmis une requête autre que la requête sélectionnée n'est pas candidat, suite à la sélection effectuée par le dispositif 1.5 de gestion de priorité, pour transmettre sur le canal de communication.

Dans une étape 5.5 suivante, le dispositif 1.5 de gestion de priorité reçoit la décision prise par les moyens d'arbitrage 1.4 quant à la requête sélectionnée. Dans une étape 5.6 suivante, le dispositif 1.5 de gestion de priorité transmet cette décision au module secondaire ayant transmis cette requête.

La Fig. 6 illustre schématiquement le dispositif de communication 1.0, selon un troisième mode de réalisation.

Le dispositif de communication 1.0 comprend un processeur 6.1 et une clé (*dongle* en anglais) 6.0 de type USB, c'est-à-dire comportant une interface conforme aux spécifications de bus série universel USB (*Universal Serial Bus* en anglais). Le processeur 6.1 et la clé 6.0 sont interconnectés via un bus 6.4 de type USB.

La clé USB 6.0 comprend le module principal 1.1 et un module secondaire 6.3 de communication, qui sont interconnectés via les liens ou fils 1.9, 1.10 et 1.11. Le module secondaire 6.3 comprend le dispositif 1.5 de gestion de priorité.

La clé USB 6.0 comporte en outre un module 6.2 de conversion interfacé avec le bus USB 6.4. Le module 6.2 de conversion convertit les données issues du bus USB 6.4, et adressées au module principal 1.1, en données compatibles avec le format supporté par un lien 6.5 reliant le module 6.2 de conversion et le module principal 1.1 ; et *vice versa.* Le module 6.2 de conversion convertit les données issues du bus USB 6.4, et adressées au module secondaire 6.3, en données compatibles avec le format supporté par un lien 6.6 reliant le module 6.2 de conversion et le module secondaire 6.3 ; et *vice versa.* Les données échangées sur les liens 6.5 et 6.6 sont typiquement des données à transmettre sur le canal de communication, des données de configuration et de statut. Les liens 6.5 et 6.6 sont par exemple compatibles avec les spécifications de récepteur-transmetteur asynchrone universel UART (*Universal Asynchronous Receiver-Transmitter* en anglais) ou avec les spécifications d'interface série de périphérique SPI (*Serial Peripheral Interface* en anglais).

De plus, le module 6.2 de conversion effectue un démultiplexage des données issues du bus USB 6.4 pour extraire les signaux de requête 6.7 de transmission sur le canal de communication, et d'information de priorité associées 6.8, issus du processeur 6.1 et les transmettre au dispositif 1.5 de gestion de priorité. Le module 6.2 de conversion effectue aussi un multiplexage des données destinées au bus USB 6.4 pour insérer les signaux 6.9 de décision générés par le module d'arbitrage 1.4 et relayés par le dispositif 1.5 de gestion de priorité. Ces signaux sont par exemple échangés par le module 6.2 de conversion via des interfaces d'entrée-sortie à usage général GPIO (*General Purpose Input-Ouput* en anglais).

La Fig. 7 illustre schématiquement le dispositif de communication 1.0, selon un quatrième mode de réalisation.

Le dispositif de communication 1.0 comprend un processeur 7.1, le module principal 1.1 de communication et les moyens d'arbitrage 1.4. Les moyens d'arbitrage 1.4 sont préférentiellement inclus dans le module principal 1.1. Le processeur 7.1 est interconnecté au module principal 1.1 via les liens ou fils 1.9, 1.10 et 1.11. Pour ce faire, des interfaces GPIO du processeur 7.1 peuvent être utilisées.

Le processeur 7.1 comprend des moyens d'émulation 7.2 du comportement d'un module secondaire de communication vis-à-vis des moyens d'arbitrage 1.4, de façon à interdire toute transmission par le module principal 1.1 sur le canal de communication. Cette émulation est effectuée sur la base d'informations relatives à au moins une transmission à effectuer par au moins un dispositif extérieur au dispositif de communication 1.0. Ce dispositif extérieur peut être sous le contrôle du processeur 7.1 et être localisé sur un même équipement que le dispositif de communication 1.0. Ce dispositif extérieur peut aussi être localisé sur un équipement distant.

Le processeur 7.1 est capable de prévoir les instants auxquels le dispositif extérieur effectue des transmissions sur le canal de communication. Grâce à la connaissance de ces instants, le processeur 7.1 permet de limiter les interférences sur le canal de communication en émettant une requête sur le lien ou fil 1.9. Le processeur 7.1 a ainsi un comportement de module secondaire de communication : il transmet des requêtes de transmission sur le canal de communication, bien que n'étant pas lui-même un transmetteur sur ce canal. Il permet alors d'éviter que le dispositif de communication 1.0 effectue une transmission sur le canal de communication, alors qu'une transmission par un dispositif extérieur est prévue. En simulant ainsi une transmission sur le canal, il permet de limiter les interférences pour des données destinées à être reçues par le dispositif de communication 1.0 via le canal de communication.

Pour pouvoir prévoir ces instants, le processeur 7.1 peut par exemple recenser les services utilisant le canal de communication. Par exemple ces services nécessitent des communications périodiques. Le processeur 7.1 peut alors construire une table de description de ces services et l'utiliser pour déclencher les moyens d'émulation 7.2 du comportement d'un module secondaire.

Pour effectuer ce recensement de services, le processeur 7.1 communique au niveau applicatif avec tout autre dispositif avec lequel il partage le canal de communication. Il peut obtenir de cet autre dispositif des informations quant aux communications prévues par ses services. Il peut par exemple obtenir de cet autre dispositif des informations quant à la périodicité des communications prévues, à leur durée, à leur niveau de priorité et au type de service auquel elles sont associées. Il est possible de prendre en compte, dans la détermination de la durée d'une communication prévue, le fait qu'elle nécessite ou pas des acquittements.

Le processeur 7.1 peut obtenir l'information de périodicité des communications associées aux services recensés en requérant cette information auprès de dispositifs mettant en oeuvre ces services. Cette information peut être stockée en mémoire non volatile par les dispositifs concernés. Cette information peut aussi être obtenue par le processeur 7.1 par apprentissage, en analysant des signaux ou données échangés sur le canal de communication.

Les informations de priorité échangées entre modules peuvent être définies en fonction de caractéristiques applicatives. Selon un premier exemple, des niveaux de priorité peuvent être définis en fonction de contraintes de consommation énergétique des dispositifs impliqués par chaque service. Les communications d'un dispositif très contraint énergétiquement, par exemple alimenté par piles ou par batterie, peuvent alors être considéré comme prioritaires par rapport celles d'un dispositif moins contraint énergétiquement, par exemple alimenté sur secteur. On peut ainsi limiter les dépenses énergétiques liées aux échecs de transmission et aux retransmissions de données. Selon un second exemple, les communications d'un service relatif à la sécurité d'une habitation peuvent être considérées comme prioritaires par rapport à celles d'un service de gestion de chauffage dans un système domotique. Selon un troisième exemple, les communications d'un service temps-réel, tel que des communications de données voix ou des communications de la phase d'association de la technologie Bluetooth (marque déposée), peuvent être considérées comme prioritaires par rapport à celles d'un service non temps-réel. Des combinaisons de ces caractéristiques applicatives et/ou d'autres caractéristiques applicatives peuvent être considérées pour définir le niveau de priorité de la transmission sur le canal de communication.

La Fig. 8 illustre schématiquement un algorithme mis en oeuvre par le processeur 7.1 du dispositif de communication 1.0, selon le quatrième mode de réalisation décrit ci-dessus en relation avec la Fig. 7.

Tout ou partie de l'algorithme décrit ci-après peut être implémenté sous forme logicielle par exécution d'un ensemble d'instructions par une machine programmable, tel qu'un DSP ou un microcontrôleur, ou être implémenté sous forme matérielle par une machine ou un composant dédié, tel qu'un FPGA ou un ASIC.

Dans une étape 8.1, le processeur 7.1 obtient des informations temporelles quant à la transmission de données par d'autres dispositifs ayant accès au canal de communication.

Dans une étape 8.2 suivante, le processeur 7.1 détecte des événements temporels relatifs aux informations obtenues lors de l'étape 8.1. Par exemple, le processeur 7.1 maintient une table des services qui sont actifs via le canal de communication, cette table comprenant une information quant à l'instant de la prochaine communication pour chaque service. Le processeur 7.1 compare ces informations d'instant de communication avec la valeur contenue dans un registre s'incrémentant selon le cadencement d'une horloge du dispositif de communication 1.0. Lorsqu'une de ces informations d'instant de communication correspond avec la valeur du registre, la communication a lieu sur le canal de communication. Le processeur 7.1 met alors la table des services à jour pour que soit prise en compte la prochaine communication du service concerné.

Dans une étape 8.3 suivante, le processeur 7.1 transmet au module principal 1.1 des requêtes de transmissions sur le canal de communication et préférentiellement des informations de priorité associées. Le processeur 7.1 émule ainsi le comportement d'un module secondaire de communication vis-à-vis des moyens d'arbitrage 1.4, de façon à interdire toute transmission par le module principal 1.1 sur le canal de communication. Préférentiellement, cette émulation est effectuée sur la base des événements temporels détectés dans l'étape 8.2 et des informations temporelles, telle que des durées de communication, obtenues à l'étape 8.1. Le processeur 7.1 reçoit en retour la décision des moyens d'arbitrage 1.4 quant à la requête. S'il reçoit, de la part des moyens d'arbitrage, une décision de refus de transmission sur le canal de communication, à cause du niveau de priorité de sa requête, le processeur 7.1 peut s'attendre à des interférences quant à la communication prévue par la table de services. Cette communication devra alors être renouvelée.

Prenons un premier exemple selon lequel le dispositif de communication 1.0 possède un module principal 1.1 comportant une interface WiFi (marque déposée). Le processeur 7.1 a la connaissance qu'à un instant *t0,* un capteur ZigBee (marque déposée) placé à distance va transmettre. Il transmet alors juste avant l'instant *t0* une requête de transmissions sur le canal de communication, via le lien ou fil 1.9. Il transmet aussi, via le lien ou fil 1.10, l'information de priorité associée au service auquel la transmission par le capteur distant correspond. Les moyens d'arbitrage 1.4 peuvent suspendre les transmissions via l'interface WiFi (marque déposée) pour laisser le canal de communication libre pour que le capteur distant puisse transmettre.

Prenons un second exemple selon lequel le dispositif de communication 1.0 possède un module principal 1.1 comportant une interface WiFi (marque déposée), et possède l'architecture décrite ci-dessus en relation avec la Fig. 6. Le processeur 6.1 met en oeuvre un mécanisme de surveillance des activités sur le bus USB 6.4, qui peut être partagé avec d'autres dispositifs que la clé USB 6.0. Lorsque le processeur 6.1 détecte, ou prévoit, un étranglement (*bottleneck* en anglais) sur le bus USB 6.4, il émule le comportement d'un module de communication vis-à-vis des moyens d'arbitrage 1.4, de façon à limiter les transmissions, voire interdire toute transmission, par au moins un des modules de communication 1.1 et 6.3 sur le canal de communication. En procédant ainsi, le processeur 6.1 permet de relâcher les contraintes sur le bus USB 6.4. Ainsi, l'émulation réalisée par le processeur 6.1 permet de gérer des conflits d'accès à des ressources internes au dispositif de communication et partagées entre le processus de transmission sur le canal de communication et au moins un autre processus du dispositif de communication.

## Revendications

1. Dispositif de communication (1.0) comprenant au moins un module (1.1) de communication et des moyens d'arbitrage (1.4) de transmissions sur un canal de communication, lesdits moyens d'arbitrage étant destinés à arbitrer des requêtes d'accès audit canal transmises par des modules de communication, **caractérisé en ce qu'**il comporte des moyens d'émulation (7.2) du comportement d'un module de communication vis-à-vis desdits moyens d'arbitrage, de façon à interdire toute transmission par ledit ou lesdits module/s de communication sur ledit canal et **en ce que** lesdits moyens d'émulation sont mis en oeuvre sur la base d'informations relatives à des transmissions prévues par des services utilisant le canal de communication et effectuées sur ledit canal de communication par au moins un dispositif extérieur audit dispositif de communication.

2. Dispositif de communication selon la revendication 1, **caractérisé en ce qu'**il comporte des moyens de recensement des services utilisant le canal de communication.

3. Dispositif de communication selon la revendication 2, **caractérisé en ce qu'**il comporte des moyens de détermination d'informations qui sont relatives à la périodicité et la durée de communications des services recensés et qui définissent lesdites informations relatives aux transmissions prévues par les services utilisant le canal de communication et effectuées sur ledit canal de communication par ledit au moins un dispositif extérieur audit dispositif de communication.

4. Dispositif de communication selon la revendication 3, **caractérisé en ce que** lesdits moyens de détermination des informations qui sont relatives à la périodicité et la durée de communications des services recensés comprennent des moyens d'obtention desdites informations qui sont relatives à la périodicité et la durée de communications des services recensés auprès du ou des dispositif/s extérieur/s et/ou des moyens d'obtention desdites informations qui sont relatives à la périodicité et la durée de communications des services recensés par apprentissage en analysant des signaux ou données échangés sur le canal de communication.

5. Dispositif de communication selon l'une quelconque des revendications 1 à 4, **caractérisé en ce que** lesdits moyens d'émulation sont mis en oeuvre sur la base d'informations de partage d'au moins une ressource dudit dispositif de communication partagée entre ledit ou lesdits module/s de communication et au moins un autre module.

6. Procédé de gestion de transmission sur un canal de communication, mis en oeuvre dans un dispositif de communication (1.0) comprenant au moins un module (1.1) de communication et des moyens (1.4) d'arbitrage de transmissions sur un canal de communication, lesdits moyens d'arbitrage étant destinés à arbitrer des requêtes de transmissions sur le canal transmises par des modules de communication, **caractérisé en ce qu'**il comporte une étape d'émulation (8.3) du comportement d'un module de communication vis-à-vis desdits moyens d'arbitrage, de façon à interdire toute transmission par ledit ou lesdits module/s de communication sur ledit canal, et **en ce que** l'étape d'émulation est mise en oeuvre sur la base d'informations relatives à des transmissions prévues par des services utilisant le canal de communication et effectuées sur ledit canal de communication par au moins un dispositif extérieur audit dispositif de communication.

7. Programme d'ordinateur, **caractérisé en ce qu'**il comprend des instructions pour mettre en oeuvre, par un dispositif de communication, le procédé selon la revendication 6, lorsque ledit programme est exécuté par un processeur dudit dispositif de communication.

8. Moyens de stockage, **caractérisés en ce qu'**ils stockent un programme d'ordinateur comprenant des instructions pour mettre en oeuvre, par un dispositif de communication, le procédé selon la revendication 6, lorsque ledit programme est exécuté par un processeur dudit dispositif de communication.

## Patentansprüche

1. Kommunikationsvorrichtung (1.0) umfassend mindestens ein Modul (1.1) zur Kommunikation und Mittel zur Arbitrierung (1.4) von Übertragungen auf einem Kommunikationskanal, wobei die Mittel zur Arbitrierung dazu bestimmt sind, Anforderungen für Zugriff auf den Kanal zu arbitrieren, die von Kommunikationsmodulen übertragen werden, **dadurch gekennzeichnet, dass** sie Mittel zur Emulation (7.2) des Verhaltens eines Kommunikationsmoduls gegenüber den Mitteln zur Arbitrierung aufweist, um jegliche Übertragung durch das/die Kommunikationsmodul/e auf dem Kanal zu untersagen, und dadurch, dass die Mittel zur Emulation auf der Basis von Informationen bezüglich Übertragungen umgesetzt sind, die von Diensten vorgesehen werden, die den Kommunikationskanal nutzen, und auf dem Kommunikationskanal von mindestens einer Vorrichtung ausgeführt werden, die außerhalb der Kommunikationsvorrichtung gelegen ist.

2. Kommunikationsvorrichtung nach Anspruch 1, **dadurch gekennzeichnet, dass** sie Mittel zur Erfassung der Dienste aufweist, die den Kommunikationskanal nutzen.

3. Kommunikationsvorrichtung nach Anspruch 2, **dadurch gekennzeichnet, dass** sie Mittel zur Bestimmung von Informationen aufweist, welche sich auf die Periodizität und die Dauer von Kommunikationen der erfassten Dienste beziehen, und welche die Informationen bezüglich der Übertragungen, die von den Diensten vorgesehen werden, die den Kommunikationskanal nutzen, und auf dem Kommunikationskanal von der mindestens einen Vorrichtung ausgeführt werden, die außerhalb der Kommunikationsvorrichtung gelegen ist, definieren.

4. Kommunikationsvorrichtung nach Anspruch 3, **dadurch gekennzeichnet, dass** die Mittel zur Bestimmung der Informationen, welche sich auf die Periodizität und die Dauer von Kommunikationen der erfassten Dienste beziehen, Mittel zum Erhalten der Informationen, welche sich auf die Periodizität und die Dauer von Kommunikationen der erfassten Dienste beziehen, bei der oder den äußeren Vorrichtung/en und/oder Mittel zum Erhalten der Informationen, welche sich auf die Periodizität und die Dauer von Kommunikationen der erfassten Dienste beziehen, durch Lernen, indem Signale oder Daten analysiert werden, die auf dem Kommunikationskanal ausgetauscht werden, umfassen.

5. Kommunikationsvorrichtung nach einem der Ansprüche 1 bis 4, **dadurch gekennzeichnet, dass** die Mittel zur Emulation auf der Basis von Teilungsinformationen mindestens einer Ressource der Kommunikationsvorrichtung umgesetzt sind, die zwischen dem oder den Kommunikationsmodul/en und mindestens einem anderen Modul geteilt wird.

6. Verfahren zur Übertragungsverwaltung auf einem Kommunikationskanal, das in einer Kommunikationsvorrichtung (1.0) umgesetzt ist, die mindestens ein Modul (1.1) zur Kommunikation und Mittel (1.4) zur Arbitrierung von Übertragungen auf einem Kommunikationskanal umfasst, wobei die Mittel zur Arbitrierung dazu bestimmt sind, Anforderungen für Übertragungen auf dem Kanal zu arbitrieren, die von Kommunikationsmodulen übertragen werden, **dadurch gekennzeichnet, dass** es einen Schritt des Emulierens (8.3) des Verhaltens eines Kommunikationsmoduls gegenüber den Mitteln zur Arbitrierung aufweist, um jegliche Übertragung durch das/die Kommunikationsmodul/e auf dem Kanal zu untersagen, und dadurch, dass der Schritt des Emulierens auf der Basis von Informationen bezüglich Übertragungen umgesetzt wird, die von Diensten vorgesehen werden, die den Kommunikationskanal nutzen und auf dem Kommunikationskanal von mindestens einer Vorrichtung ausgeführt werden, die außerhalb der Kommunikationsvorrichtung gelegen ist.

7. Computerprogramm, **dadurch gekennzeichnet, dass** es Anweisungen umfasst, um durch eine Kommunikationsvorrichtung das Verfahren nach Anspruch 6 durchzuführen, wenn das Programm von einem Prozessor der Kommunikationsvorrichtung ausgeführt wird.

8. Speichermittel, **dadurch gekennzeichnet, dass** sie ein Computerprogramm speichern, das Anweisungen umfasst, um durch eine Kommunikationsvorrichtung das Verfahren nach Anspruch 6 umzusetzen, wenn das Programm von einem Prozessor der Kommunikationsvorrichtung ausgeführt wird.

## Claims

1. Communication device (1.0) comprising at least one communication module (1.1) and arbitration means (1.4) for arbitrating transmissions over a communication channel, said arbitration means being intended to arbitrate access requests to said channel transmitted by communication modules, **characterized in that** it comprises emulation means (7.2) for emulating the behaviour of a communication module in relation to said arbitration means, so as to prevent any transmission by said communication module or modules over said channel and **in that** said emulation means are implemented on the basis of information relating to transmissions provided by services using the communication channel and performed on said communication channel by at least one device external to said communication device.

2. Communication device according to Claim 1, **characterized in that** it comprises means of identifying services using the communication channel.

3. Communication device according to Claim 2, **characterized in that** it comprises means for determining information which relates to the periodicity and duration of communications of the identified services and which define said information relating to the transmissions provided by the services using the communication channel and performed over said communication channel by said at least one device external to said communication device.

4. Communication device according to Claim 3, **characterized in that** said means for determining the information which relates to the periodicity and duration of communications of the identified services comprise means for obtaining said information which relates to the periodicity and duration of communications of the services identified in the external device or devices and/or means for obtaining said information which relates to the periodicity and duration of communications of the services identified through learning by analysing signals or data exchanged over the communication channel.

5. Communication device according to any one of Claims 1 to 4, **characterized in that** said emulation means are implemented on the basis of sharing information from at least one resource of said communication device shared between said communication module or modules and at least one other module.

6. Method for managing transmission over a communication channel, implemented in a communication device (1.0) comprising at least one communication module (1.1) and arbitration means (1.4) for arbitrating transmissions over a communication channel, said arbitration means being intended to arbitrate requests for transmissions over said channel transmitted by communication modules, **characterized in that** it comprises an emulation step (8.3) for emulating the behaviour of a communication module in relation to said arbitration means, so as to prevent any transmission by said communication module or modules over said channel and **in that** said emulation step is implemented on the basis of information relating to transmissions provided by services using the communication channel and performed on said communication channel by at least one device external to said communication device.

7. Computer program, **characterized in that** it comprises instructions for implementing, by a communication device, the method according to Claim 6, when said program is executed by a processor of said communication device.

8. Storage means, **characterized in that** they store a computer program comprising instructions for implementing, by a communication device, the method according to Claim 6, when said program is executed by a processor of said communication device.
